# EUROPEAN PATENT SPECIFICATION

(11) **EP 0 417 914 B1**
(45) Date of publication and mention of the grant of the patent: **06.03.1996**
(21) Application number: 90308956.3
(22) Date of filing: 15.08.1990
(51) Int. Cl.: H04N 7/24

(54) **Decoding and coding apparatus for compressed digital video data**
Dekodierungs- und Kodierungsgerät für komprimierte digitale Videodaten
Dispositif de décodage et de codage pour données vidéo digitales comprimées

(30) Priority: 15.08.1989 JP 210446/89
(43) Date of publication of application: 20.03.1991
(73) Proprietor: SONY CORPORATION, Tokyo (JP)
(72) Inventor: Kondo, Tetsujiro, Shinagawa-ku, Tokyo (JP)
(74) Representative: Ayers, Martyn Lewis Stanley

(56) References cited:
- US-A- 4 802 005
- FREQUENZ vol. 42, no. 10, October 1988, BERLIN, DE pages 284 - 288; G. SCHAMEL: 'Mehrdimensionale Vorfilterung, Rreduktion der Abtastrate und Interpolation von HDTV-Signalen (Teil I)'
- Proceedings of the Second International Workshop on Signal Processing of HDTV; L'Aquila, It; 29. February - 2, March, 1988; NORTH-HOLLAND, Amster- dam, NL; L. CONTIN ET AL.: 'Very Low Lambda2 Bitrate Coding of HDTV Signals'; pages 303-308

## Description

This invention relates to encoding/decoding apparatus for transmission equipment for transmitting or recording digital picture data with the amount of data compressed through so-called highly efficient encoding.

One method of encoding picture data to reduce the amount of data which it is necessary to transmit or to record involves converting the data into a two-dimensional or three-dimensional block structure and compressed and then encoding the blocks so produced. A two-dimensional block is formed by segmenting one field or frame, while a three-dimensional block is formed as the assembly of two-dimensional blocks respectively belonging to plural frames contiguous in terms of time. Two-dimensional block encoding has the advantage that the size of the encoding circuitry is small, while three-dimensional block encoding provides improved data compression efficiency and the advantage that still portions of a decoded picture is of high quality.

It is also known to combine sub-sampling with block encoding. With such encoding, highly efficient compression can be achieved. In particular, a system in which the phase of sub-sampling varies at each frame can attain compression without degradation of picture definition by the use of interpolation in the time direction for still portions of the picture.

The transmission side of this encoding technique is equipped with a sub-sampling circuit, a block segmentation circuit for converting the order of input data into a three-dimensional block structure, an encoder for block encoding, and a buffering circuit is provided for controlling the flow of data so that the amount of data generated, per unit time (for example, one frame period) produced by the encoder does not exceed the capacity of the transmission path. On the reception side are provided a decoder for block decoding, a block desegmentation circuit for converting the three-dimensional block structure into the scanning order, and an interpolating circuit for interpolating non-transmission picture elements thinned out in the sub-sampling. A similar coding system is described in US-A-4 802 005.

In the conventional encoding system combining sub-sampling and three-dimensional block encoding, the block segmentation circuit requires a memory of two frame capacity, and the buffering circuit needs a memory of two frame capacity for delaying picture data. Also, on the reception side, a two-frame memory for block desegmentation and a two-frame memory for interpolation are needed. Consequently, a memory capacity of eight frames is needed in total on the transmission side and the reception side, and this presents the problem that the size and cost of the hardware involved is large.

An object of the invention is, therefore, to provide decoding apparatus for digital picture data which enables two-dimensional processing to provide picture quality resembling that of three-dimensional coding.

According to the invention, there is provided a decoding apparatus for decoding data transmitted by a coding apparatus for coding digital video data in a block format allowing compression of the video data representing a two dimensional group of picture elements, said coding apparatus having movement discriminating means for detecting movement in each block and generating a discriminating code indicative of detected movement; sub-sampling means for sub-sampling picture elements in predetermined positions in each of said blocks of digital video data to reduce the number of picture elements in each said of blocks to 1/n of the original number of the picture elements in each of said blocks, n being an integer, thereby producing thinned-out data, the sub-sampling of said picture elements in n time-sequential blocks by said sub-sampling means having phases that are shifted sequentially; and encoding and transmitting means for encoding said thinned-out data and transmitting the discriminating code and the encoded data, said decoding apparatus comprising:
decoding means for decoding said encoded data and for generating the decoded data;
adaptive interpolation means for interpolating thinned-out data from actually transmitted data, the operation of said interpolation means being responsive to said discriminating code.

The invention will be further described by way of non-limitative example with reference to the accompanying drawings, in which:-
Figure 1 is a block diagram showing the entire structure of one embodiment of the invention;
Figure 2 is a schematic diagram showing a pattern of sub-sampling;
Figure 3 is a block diagram of one example of a block segmentation circuit;
Figures 4, 5 and 6 are schematic diagrams for describing an operation of the block segmentation circuit;
Figure 7 is a block diagram of one example of an encoder; and
Figure 8 is another example of an encoder.

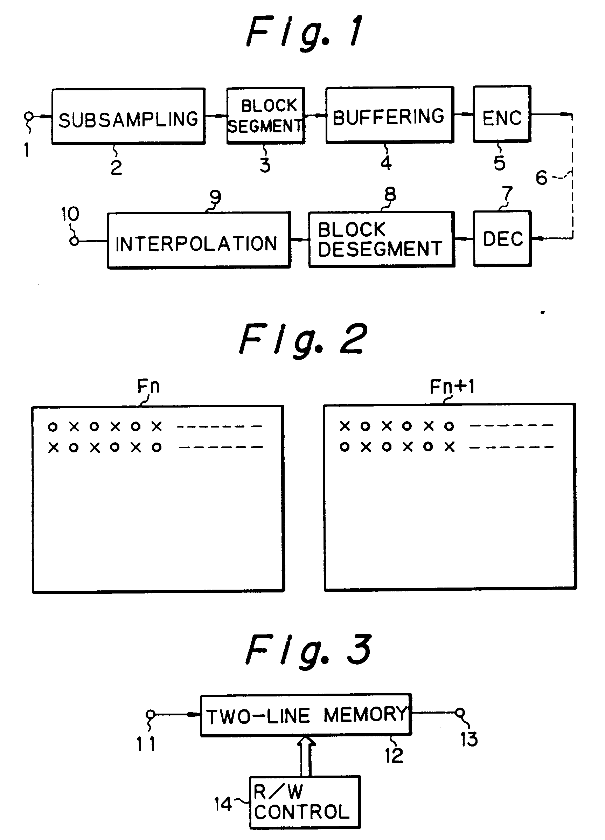

Figure 1 shows the overall structure of a transmission system incorporating one embodiment of the invention. Digital video data is supplied from an input terminal indicated at 1 to a sub-sampling circuit 2. At the sub-sampling circuit 2, the incoming picture element data is sub-sampled at a sampling frequency equal to one half of the original frequency. A pre-filter for preventing aliasing is provided at the sub-sampling circuit 2.

Figure 2 shows an example of a sub-sampling pattern. In figure 2, ○ indicates transmission picture elements of the original picture element data, ie, those elements which are sampled, while X indicates its non-transmission picture elements, ie, those that are not. In each frame, the sub-sampling is done by a pattern of a quincunx. Also, the phase is inverted between two frames Fn and Fn+1 contiguous in terms of time. As a result, the sub-sampling pattern for the two frames is complementary between frames, and in a block of a still picture, non-transmission picture elements can be interpolated by picture element data at positions corresponding to the previous frame to prevent the picture definition being degraded.

The output signal of the sub-sampling circuit 2 is supplied to a block segmentation circuit 3 in which it is converted into a two-dimensional block structure. In this embodiment, (2 x 2) blocks are formed using two-line memory.

Figure 3 shows the structure of the block segmentation circuit 3. Data subjected to the sub-sampling is written into a two-line memory 12 from an input terminal indicated at 11. Data in block-order is taken at an output terminal 13 from the two-line memory 12. The read-out and the write-in for the two-line memory 12 are controlled by an R/W control circuit 14.

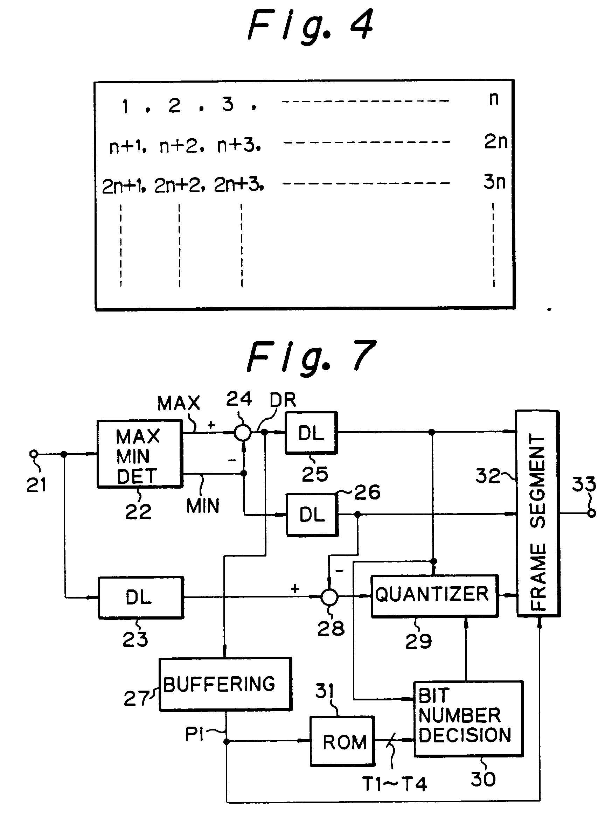

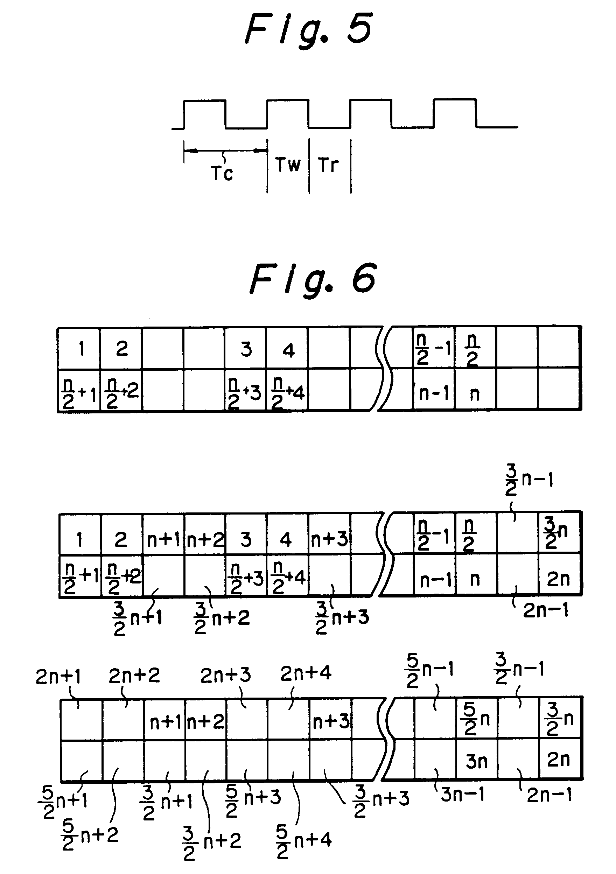

The operation of the block segmentation circuit 3 will be described referring to figures 4 to 6. In the explanation of the operation, numbers are attached to picture element data in a post-sub-sampling frame as shown in figure 4. Clearly, picture element data attached each number of 1 to n is contained in a line. Also, as shown in figure 5, the first half period of one block period Tc is a memory write period Tw, and the latter half period thereof is a memory read period Tr. The R/W control circuit 14 controls the write and read periods so that the two-line memory 12 carries out write and read operations alternately.

Figure 6 shows three stages in the changing contents of the two-line memory 12. In the first stage, picture element data in the first line has been written, so that n picture element data in the first line (1, 2, 3, ..., n/2, ..., n) have been written into the two-line memory 12 in successive pairs of addresses separated by a pair of addresses. Upon completion of the write-in of picture element data in the current line, the written data is read out with a cycle shown in figure 5, and picture element data (n+1, n+2, ..., 3/2n ..., 2n) of the second line is written into the addresses left vacant by the writing of the picture element data of the first line.

Since the write-in of the picture element data of the second line and the read-out of the two-line memory 12 are performed alternately, picture element data of the first line and the second line of (1, 2, n+1, n+2, 3, 4, n+3, n + 4, ..., n-1, n, 2n-1, 2n) converted in the order of blocks is generated at the output terminal 13. Similar manner is repeated and the data converted in the order of blocks is generated from block segmentation circuit 3.

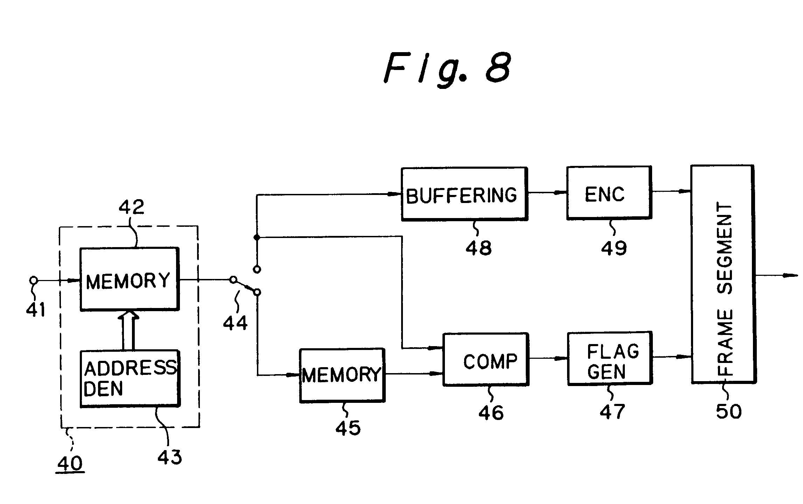

The output signal of the block segmentation circuit 3 is supplied to a movement detector although not shown, and one-bit flag indicative of a moving picture or a still picture is generated for each block. The flag is transmitted to the reception side. Moreover, picture element data from the block segmentation circuit 3 is supplied to a buffering circuit 4. An encoder 5 is provided in association with the buffering circuit 4. The encoder 5 is a variable length ADRC (encoding adaptive to dynamic range) encoder. An example of the structure of the buffering circuit 4 and the encoder 5 is shown in figure 7. In figure 7, data is supplied to an input terminal indicated at 21 from the block segmentation circuit 3. The output signal of the block segmentation 3 is supplied to a maximum value and a minimum value detector 22 and a delay circuit 23. The detector 22 detects the maximum value MAX and the minimum value MIN of each block. The delay circuit 23 delays data for the time necessary for detecting the maximum value MAX and the minimum value MIN, and for determining a threshold value so that the amount of generated data does not exceed a target value. In this example, since the control is such that the amount of data generated in two lines does not exceed the target value, the delay time of the delay circuit 23 is selected to be slightly longer than two lines. Each line contains a horizontal blanking period where effective data is not present makes it possible to determine the threshold value during the blanking period.

A calculation of (MAX - MIN) is done at a calculating circuit 24, and the dynamic range value DR is provided from the calculating circuit 24. The dynamic range value DR is supplied to delay circuits 25 and 26 and to a buffering circuit 27. Also, picture element data from the delay circuit 23 is supplied to a subtractor 28. At the subtractor 28. At the subtractor 28, the minimum value MIN is subtracted from the picture element data, and data with the minimum value MIN component removed is generated at the output of the subtractor 28.

The minimum-value-eliminated picture element data thus obtained is fed to a quantisation circuit 29. The dynamic range DR given through the delay circuit 25 and data indicative of the bit number from a bit-number decision circuit 30 are supplied to the quantisation circuit 29. The bit-number decision circuit 30 determines the bit number of quantisation of a corresponding block depending on the dynamic range DR and threshold values T1 to T4 from a ROM 31. The ROM 31 generates the sets of the threshold values corresponding to threshold value codes Pi generated in the buffering circuit 27.

Assuming that the quantisation bit number is b, ADRC obtains a quantisation step width Δ by dividing the dynamic range DR into (2^{b}), divides each picture element data with the minimum value eliminated by the quantisation step width Δ and provides a code signal by obtaining an integer from the quotient. In the case of the variable length ADRC, the quantisation bit number b can be changed depending on the dynamic range DR. Assuming that threshold values for determining the bit number are T1, T2, T3 and T4 (where T1 < T2 < T3 < T4), in the block of (DR < T1), (b=0) (that is, non-transmission of a code signal) is established. In the block of (T1 ≤ DR < T2), (b=1) is established, in the block of (T2 ≤ DR < T3), (b=2) is established, and in the block of (DR ≥ T4), (b = 4) is established.

In such a variable length ADRC, the amount of generated data can be controlled by varying the threshold values T1 to T4. Since there are infinite combination of sets of threshold values, for example, 32 threshold values, which can be identified by a parameter code Pi (P0, P1, P2, ..., P31), are prepared. The sets of the threshold values are set so that the generated information amount decreases or increases monotonically for each change of the parameter code Pi.

In the buffering circuit 27, the frequencies of the dynamic range values DR of the blocks in the two-line period are collected to produce a cumulative type frequency distribution table ranging between minimum and maximum dynamic range values. The frequency distribution table is formed by supplying the dynamic range DR as an address of RAM and writing +1 into the predetermined address. With this frequency distribution table, the frequency is read out sequentially from an address at which the dynamic range is larger, accumulated with the value read out of the previous address and written into the same address so as to form the cumulative frequency distribution table. By applying the sets of the threshold values to the cumulative type frequency distribution table, a calculation of the amount of generated information can be made. The generated information amount thus calculated and the target value are compared, and the sets of the threshold values can be determined so that the data amount does not exceed the target value and that the degradation of picture quality can be suppressed. The parameter code Pi from the buffering circuit 27 indicates the optimum set of the threshold values.

The buffering of such variable length ADRC is described in detail in the specification of the Japanese patent laid open publication number Sho 63-111781 already proposed by the present Applicant. Here, this embodiment is different from the previous application in that the calculation of the amount of generated information and the control are done in the two-line period rather than a frame period.

The dynamic range DR and the minimum value MIN from the delay circuits 25 and 26 and the code signal from the quantisation circuit 29 and the parameter code Pi indicative of the set of the threshold values are given to a frame segmentation circuit 32, and transmission data is taken out at an output terminal 33.

The frame segmentation circuit 32 forms transmission data in which the dynamic range DR, the minimum value MIN, the code signal and the parameter code Pi are arranged in byte serial form and a synchronisation signal is added. In addition, in the frame segmentation circuit 32, the encoding of error correction code for each of additional codes (DR, MIN, Pi) and the code signal is performed. Also, although not shown, a movement detection flag for every block is supplied to the frame segmentation circuit 32, and the movement detection flag is transmitted.

Transmission data from the output terminal 33 of the frame segmentation circuit 32 is supplied to a reception side through a transmission path 6 indicated by a broken line. The transmission path 6 is a process of recording and reproduction composed of a magnetic tape and a rotary head, for example.

On the reception side, as shown in figure 1, reception data is supplied to a decoder 7. With respect to the above mentioned ADRC encoder 5, the decoder 7 is equipped with a complementary frame desegmentation circuit. The bit number of each block is detected from the parameter code Pi and the dynamic range DR separated at the frame desegmentation circuit. The value of each picture element with the minimum value eliminated in a block is decoded from the bit number, the dynamic range DR and the code signal. The minimum value MIN is added to the decoded value, and each picture element data is thus reproduced.

A reproduced value from a decoder 7 is fed to a block desegmentation circuit 8. Complementarily to the block segmentation circuit 3, the block desegmentation circuit 8 is a circuit for converting the data in the order of blocks into the scanning order. The block desegmentation circuit 8 can be made up of a two-line memory similar to the block segmentation circuit 3.

The output signal of the block desegmentation circuit 8 is supplied to an interpolating circuit 9. In the interpolating circuit 9, spatial interpolation using reproduced data in a frame is performed referring to the movement detection flag with respect to picture element data contained in a moving block. With respect to picture elements contained in a still block, interpolation is done in the time direction using reproduced data in the previous frame. As an example of spatial interpolation, a method where non-transmission picture elements are interpolated by the average value of reproduced data of transmission picture elements present in the vicinity of the non-transmission picture elements in a frame can be employed. The interpolation in the time direction converts reproduced data of transmission picture elements present in the vicinity of the non-transmission picture elements in a frame can be employed. The interpolation in the time direction converts reproduced data of transmission picture elements in the previous frame into the non-transmission picture elements in the present frame using the fact that the phase of the sub-sampling is complementary to the previous frame. For the interpolation in the time direction, a frame memory is needed. Reproduced picture data is provided at an output terminal 10 of the interpolating circuit 9.

In the above mentioned embodiment, since a block has a small size such as (2 x 2) and two-line buffering is performed, the memory capacity could possibly be reduced. However, the overhead of the additional code of each of blocks becomes heave and the efficiency of the compression deteriorates. In addition, it is possible to obtain the decoded picture having high quality by employing the small buffering unit such as two lines, since a relatively loose set of threshold values can be selected in the case where the information of the 2 lines is derived from the group of blocks having small dynamic range. However, a severe set of threshold values is selected unavoidably in respect of the unit of buffering in which the group of blocks has large successive dynamic ranges. As a result, there is a possibility that the quality of the picture deteriorates to some extent, since the allotted number of bits becomes small even with respect to a block having large dynamic range.

That is, the averaging effect of the dynamic range cannot be obtained by such a small unit of buffering and the deterioration occurs. A long term such one frame, for instance, may be as preferable a unit of buffering for preventing partial deterioration, though the memory capacity for delaying the data waiting to be transmitted is increased.

Hereunder, another example of the transmission equipment applicable to the reception equipment of the invention which is taken above consideration into account will be described referring to figure 8.

As shown in figure 8, the digital video signal is supplied to an input terminal 41 in order of raster scanning, and the input signal is written into a memory having the capability of high speed operation, and the memory capacity is selected slightly larger than one field. Now assuming the state to be initial, an input signal of a first field of n-th frame is written into the memory 42 sequentially according to control of an address generator 43.

When an input signal of a second field of the same frame is input successively, a signal having amount of two lines for instance is written into a memory area exceeding one field (namely vacant addresses). Then the data of two lines is read out together with the data of two lines of the first field data in order of blocks. The block size of (8 picture elements x 4 lines) in which each of two lines belongs to the first field and the second field respectively is employed in this embodiment. Needless to say, other block sizes can be used by changing the control of the address generator 43. The following data of two lines of the second field supplied to the memory 42 is written into vacant addresses produced by the previous read, and the data of two lines is read out together with the data of two lines of the first field data in order of blocks. Similar operation in respect of the data of the second field is repeated and the block segmented data is sequentially taken out.

The timing at which the beginning of the block segmented data is read out is nearly coincident with that the incoming of the second field data. Therefore, when the second field data has been supplied, about a half amount of data of all blocks in one frame has been read out, and the remaining data, that is, the data having the amount of one field has been stored in the memory 42. Then the write-in operation of the first field data of the succeeding (n + 1)-th frame to the vacant addresses is done and the read-out operation of the remaining half of the previous frame data in order of the blocks is performed simultaneously with the write-in operation.

Thus, when the block segmented data of all blocks in the n-th frame is read out, all of the first field data of the (n + 1)-th frame has been stored in the memory 42. The data incoming in order of raster scanning is converted to the block segmented data in the order of blocks by repeated the above operation, and the block segmented data is obtained from the memory 42. The block segmentation circuit 40 is accordingly made up from the memory 42 and the address generator 43.

The output of the block segmentation circuit 40 is supplied to a switch 44 switching every picture element. Every second picture element data is supplied to an encoder 49 via a buffering circuit 48. Thus, the switch 44 performs 1/2 sub-sampling.

A prefilter is provided in front stage of the switch 44 for practical use although not shown. The output signal of the switch 44, the non-transmitted picture element data, ie, the data which is thinned out by the 1/2 sub-sampling of the switch 44 is sequentially written into a memory 45. About a half the data of one frame, ie, one field's worth of data can be used as the storage capacity of the memory 45, since the memory 45 stores the thinned-out picture elements data in the picture elements data contained in one frame period.

The sampling phase of the picture elements data supplied to the buffering circuit 48 is inverted every frame by controlling the switch 44 according to a control pulse (not shown).

Therefore, the sampling phase of the thinned out picture elements data of the previous frame read out from the memory 45 coincides with that of the transmission picture elements data of the present frame supplied to the buffering circuit 48 from the switch 44. These inphase picture elements data are supplied to a comparator 46, whereby level comparison is performed. The output signal of comparator 46 is supplied to a flag generator 47. In the flag generator 47, the comparison output for every picture element is accumulated in each of the blocks, and the generator 47 decides whether the block is a moving picture area block or a still picture area block based on the cumulative value for that block and derives a flag from the decision. The flag only requires one bit of storage so the additional code is extremely small. Other manners of the detection of motion/still picture areas can be used, although one specific detection has been described. For instance, the detection of a moving block can be achieved by using the cumulative value which is obtained by accumulating the absolute value of the comparison output of the data of each block. In the case where the cumulative value is larger than a threshold value, the block is deemed to be as a moving block, while on the other hand, in the case where the cumulative value is not larger than the threshold value, the block is deemed to be a still block. Another basis of the decision is that the absolute values of the comparison output with respect to each of picture elements is compared with a predetermined threshold value, then the number of the comparison outputs over the threshold value is detected in the block, and the block is deemed to be a moving block if the number is more than the threshold value and still, otherwise. Thus, the motion detecting circuit is constructed by the memory 45, the comparator 46 and the flag generator 47 as a whole.

The block size of the transmission picture element data output from the switch 44 becomes 4 picture elements x 4 lines = 16 picture elements as a result of the 1/2 sub-sampling action of the switch 44. While the detail description of the buffering circuit 48 is omitted, the quantising characteristic of the encoder 49 is controlled by the buffering circuit 48 so that the amount of transmitted information does not exceed a predetermined transmission capacity. Whereas a memory capable of delaying data of one frame should be provided for the above buffering process, it is apparent that the memory capacity can be reduced to the amount of one field because of the 1/2 sub-sampling being performed. Then the encoded data from the encoder 49 and the motion flag derived from the flag generator 47 are supplied to a frame segmentation circuit 50. The frame segmentation circuit 50 performs encoding of an error correcting code, mixing a synchronising signal and the like, and generates an output signal having frame structure.

The embodiment shown in figure 8 is able to remove the above described drawback, since the block size is four times as large as that of the example shown in figure 1 and the unit of buffering is one frame, while the amount of about three fields in total is necessary as a memory capacity in the embodiment.

It may be noted that the invention is applicable to conversion encoding such as DCT (discrete cosine transform), vector quantisation for compression and encoding and is by no means limited to ADRC.

Since this invention uses a two-dimensional block, performs compression and encoding for every block and performs interpolation of non-transmission picture elements by a three-dimensional interpolating process, the memory capacity for block segmenttaion is reduced, enabling the hardware size to be small. Also, the interpolation of the non-transmission picture elements can be kept satisfactory by the three-dimensional processing.

Having described specific preferred embodiments of the present invention with reference to the accompanying drawings, it is to be understood that the invention is not limited to those precise embodiments, and that various changes and modifications may be effected therein by one skilled in the art without departing from the scope of the invention as defined in the appended claims.

## Claims

1. A decoding apparatus for decoding data transmitted by a coding apparatus for coding digital video data in a two dimensional block format allowing compression of the video data representing a two dimensional group of picture elements, said coding apparatus having movement discriminating means for detecting movement in each block and generating a discriminating code indicative of detected movement; sub-sampling means (2) for sub-sampling picture elements in predetermined positions in each of said blocks of digital video data to reduce the number of picture elements in each of said blocks to 1/n of the original number of the picture elements in each of said blocks, n being an integer, thereby producing thinned-out data, the sub-sampling of said picture elements in n time-sequential blocks by said sub-sampling means having phases that are shifted sequentially; and encoding and transmitting means (5,6) for encoding said thinned-out data and transmitting the discriminating code and the encoded data, said decoding apparatus comprising:
decoding means (7) for decoding said encoded data and for generating the decoded data;
adaptive interpolation means (9) for interpolating thinned-out data from actually transmitted data, the operation of said interpolation means (9) being responsive to said discriminating code.

2. Apparatus in accordance with claim 1, wherein said adaptive interpolation means (9) is operative to interpolate said thinned-out data by using peripheral data contained in the frame to which the thinned-out data belongs in the case where said discriminating code indicates moving block, and by using data of picture elements which is adjacent in the time direction and spatially corresponding in the case where said discriminating code indicates still block.

3. Apparatus in accordance with claim 1 or 2, wherein said encoding means (5) includes ADRC encoder.

4. Apparatus in accordance with claim 1 or 2, wherein said encoding means (5) includes a DCT encoder.

5. A coding apparatus for encoding data coding digital video data into a two dimensional block format allowing compression of the video data representing a two dimensional group of picture elements, said coding apparatus having movement discriminating means for detecting movement in each block and generating a discriminating code indicative of detected movement; sub-sampling means (2) for sub-sampling picture elements in predetermined positions in each of said blocks of digital video data to reduce the number of picture elements in each of said blocks to 1/n of the original number of the picture elements in each of said blocks, n being an integer, thereby producing thinned-out data, the sub-sampling of said picture elements in n time-sequential blocks by said sub-sampling means (2) having phases that are shifted sequentially; and encoding and transmitting means (5,6) for encoding said thinned-out data and transmitting the discriminating code and the encoded data.

## Patentansprüche

1. Decodierungsgerät zur Decodierung von Daten, die durch ein Codierungsgerät zur Codierung digitaler Videodaten in einem zweidimensionalen Blockformat übertragen werden, welches eine Komprimierung der Videodaten ermöglicht, die eine zweidimensionale Gruppe von Bildelementen darstellen, wobei das Codierungsgerät Bewegungsdiskriminierungsmittel zur Detektion von Bewegung in jedem Block und zur Erzeugung einer Diskriminierungscodierung aufweist, die eine detektierte Bewegung anzeigt; Teilabtastmittel (2) zur Teilabtastung von Bildelementen in vorbestimmten Positionen in jedem der besagten Blöcke der digitalen Videodaten zur Reduzierung der Anzahl von Bildelementen in jedem der Blöcke auf 1/n von der ursprünglichen Anzahl von Bildelementen in jedem der Blöcke, wobei n ganzzahlig ist und womit ausgedünnte Daten erzeugt werden und die Teilabtastung der Bildelemente in n mal aufeinanderfolgenden Blöcken durch die Teilabtastungsmittel mit Phasen geschieht, die aufeinanderfolgend versetzt sind; und Codierungs- und Übertragungsmittel (5, 6) zur Codierung der ausgedünnten Daten und Übertragung der Diskriminierungscodierung und der codierten Daten, wobei das Decodierungsgerät folgendes aufweist:
Decodierungsmittel (7) zur Decodierung der codierten Daten und zur Erzeugung der decodierten Daten;
adaptives Interpolationsmittel (9) zur Interpolation ausgedünnter Daten von aktuell übertragenen Daten, wobei die Funktion des Interpolationsmittels (9) auf die Diskriminierungscodierung anspricht.

2. Gerät nach Anspruch 1, worin das adaptive Interpolationsmittel (9) funktionsfähig ist zur Interpolation ausgedünnter Daten unter Verwendung peripherer Daten, die in dem Vollbild enthalten sind, zu dem die ausgedünnten Daten gehören, in dem Fall, in dem die Diskriminierungscodierung einen bewegten Block anzeigt und unter Verwendung von Daten von Bildelementen, die in der Zeitrichtung benachbart sind und räumlich korrespondieren, in dem Fall, in dem die Diskriminierungscodierung einen stillstehenden Block anzeigt.

3. Gerät nach Anspruch 1 oder 2, worin das Codierungsmittel (5) einen ADRC-Codierer enthält.

4. Gerät nach Anspruch 1 oder 2, worin das Codierungsmittel einen DCT-Codierer enthält.

5. Codierungsgerät zur Codierung von Daten, die digitale Videodaten in einem zweidimensionalen Blockformat codieren, welches eine Komprimierung der Videodaten zuläßt, die eine zweidimensionale Gruppe von Bildelementen darstellen, wobei das Codierungsgerät Bewegungsdiskriminierungsmittel zur Detektion von Bewegung in jedem Block und zur Erzeugung einer Diskriminierungscodierung aufweist, die eine detektierte Bewegung anzeigt; Teilabtastmittel (2) zur Teilabtastung von Bildelementen in vorbestimmten Positionen in jedem der Blöcke der digitalen Videodaten zur Reduzierung der Anzahl von Bildelementen in jedem der Blöcke auf 1/n der ursprünglichen Anzahl der Bildelemente in jedem der Blöcke, wobei n ganzzahlig ist und womit ausgedünnte Daten erzeugt werden und die Teilabtastung der Bildelemente in n mal aufeinander folgenden Blöcken durch Teilabtastmittel (2) mit Phasen geschieht, die aufeinanderfolgend versetzt sind; und Codierungs- und Übertragungsmittel (5, 6) zur Codierung der ausgedünnten Daten und Übertragung der Diskriminierungscodierung und der codierten Daten.

## Revendications

1. Dispositif de décodage pour décoder des données émises par un dispositif de codage pour coder des données vidéo numériques en un format de blocs bidimensionnel permettant la compression de la donnée vidéo représentant un groupe bidimensionnel d'éléments d'image, ledit dispositif de codage comportant : un moyen de détermination de mouvement pour détecter le mouvement dans chaque bloc et produire un code de détermination représentatif du mouvement détecté ; un moyen de sous-échantillonnage (2) pour sous-échantillonner des éléments d'image dans des positions prédéterminées dans chacun desdits blocs de donnée vidéo numérique pour réduire le nombre des éléments d'image dans chacun desdits blocs à 1/n du nombre d'origine des éléments d'image de chacun desdits blocs, n étant un nombre entier, en produisant ainsi une donnée éclaircie, le sous-échantillonnage desdits éléments d'image dans n blocs séquentiels dans le temps, par ledit moyen de sous-échantillonnage, ayant des phases qui sont décalées séquentiellement ; et un moyen de codage et d'émission (5, 6) pour coder ladite donnée éclaircie et pour émettre le code de détermination et la donnée codée, ledit dispositif de décodage comprenant :
un moyen de décodage (7) pour décoder ladite donnée codée et pour produire la donnée décodée ;
un moyen d'interpolation adaptatif (9) pour interpoler la donnée éclaircie à partir de la donnée réellement transmise, le fonctionnement dudit moyen d'interpolation (9) étant sensible audit code de détermination.

2. Dispositif selon la revendication 1, dans lequel ledit moyen d'interpolation adaptatif (9) sert à interpoler ladite donnée éclaircie en utilisant les données périphériques contenues dans l'image complète à laquelle appartient la donnée éclaircie, dans le cas où ledit code de détermination indique un bloc en mouvement, et en utilisant les données des éléments d'image qui sont adjacents dans la direction temporelle et qui correspondent spatialement, dans le cas où ledit code de détermination indique un bloc fixe.

3. Dispositif selon la revendication 1 ou 2, dans lequel ledit moyen de codage (5) comprend un codeur ADRC (de codage adaptatif à une gamme dynamique).

4. Dispositif selon la revendication 1 ou 2, dans lequel ledit moyen de codage (5) comprend un codeur à DCT (transformée cosinus discrète).

5. Dispositif de codage pour coder des données vidéo numériques en un format de blocs bidimensionnel permettant la compression de la donnée vidéo représentant un groupe bidimensionnel d'éléments d'image, ledit dispositif de codage comportant : un moyen de détermination de mouvement pour détecter le mouvement dans chaque bloc et produire un code de détermination représentatif du mouvement détecté ; un moyen de sous-échantillonnage (2) pour sous-échantillonner des éléments d'image dans des positions prédéterminées dans chacun desdits blocs de donnée vidéo numérique pour réduire le nombre des éléments d'image dans chacun desdits blocs à 1/n du nombre d'origine des éléments d'image de chacun desdits blocs, n étant un nombre entier, en produisant ainsi une donnée éclaircie, le sous-échantillonnage desdits éléments d'image dans n blocs séquentiels dans le temps, par ledit moyen de sous-échantillonnage (2), ayant des phases qui sont décalées séquentiellement ; et un moyen de codage et d'émission (5, 6) pour coder ladite donnée éclaircie et pour émettre le code de détermination et la donnée codée.
